# DEMANDE DE BREVET EUROPEEN

(11) **EP 0 936 314 A1**
(43) Date de publication de la demande: **18.08.1999**
(21) Numéro de dépôt: 99400346.5
(22) Date de dépôt: 12.02.1999
(51) Int. Cl.: E02D 29/02

(54) **Dispositif de lestage d'une bâche pour silo agricole ou analogue**

(30) Priorité: 12.02.1998 FR 9801707
(71) Demandeur: Velitex S.A., 78000 Versailles (FR)
(72) Inventeur: Uzzan, Charles, 92100 Boulogne Billancourt (FR)
(74) Mandataire: Nicolle, Olivier

(57) **Abrégé**

Le dispositif de lestage est du type comprenant une pluralité de sacs élémentaires de lestage destinés à être rangés les uns à la suite des autres sur une zone à lester choisie. Ce dispositif comprend au moins un tube (4) creux, d'un diamètre sensiblement égal à celui des sacs élémentaires (5) dans lequel au moins deux sacs élémentaires sont disposés sensiblement en contact l'un derrière l'autre sans être reliés l'un à l'autre, ce qui permet de déplacer facilement sur la zone à lester les sacs élémentaires ainsi logés dans le tube. La zone à lester est une bâche en matière plastique d'un silo, une digue ou analogue.

## Description

La présente invention se rapporte à un dispositif de lestage du type comprenant une pluralité de sacs élémentaires de lestage destinés à être rangés les uns à la suite des autres sur une zone à lester choisie.

Elle s'applique généralement au lestage d'une bâche pour silo agricole ou analogue. Elle peut aussi s'appliquer à la constitution d'une digue ou analogue.

D'une manière générale, l'alimentation des bovins telle que l'herbe ou le maïs est conservée dans des silos recouverts d'une bâche du type en matière plastique à base de polyéthylène appelée ci-après "bâche plastique".

Une telle bâche plastique doit être convenablement lestée pour éviter toute entrée et/ou sortie de gaz susceptibles d'altérer l'alimentation des bovins, et par conséquent la qualité du lait qui est directement liée à la qualité de l'alimentation des bovins.

Actuellement, les moyens de lestage des bâches plastiques sont des vieux pneus ou des sacs élémentaires remplis de graviers ou de sable.

En pratique, l'utilisateur du silo agricole découvre la bâche au fur et à mesure de la consommation des bovins selon un front d'attaque défini sur la bâche par des sacs élémentaires ou pneus rangés sensiblement en contact les uns derrière les autres selon une ligne appropriée.

Habituellement, le front d'attaque s'étend sur toute la largeur du silo. Il en résulte que l'utilisateur doit déplacer régulièrement une grande quantité de pneus ou sacs élémentaires, ce qui constitue une perte de temps importante et surtout beaucoup de charges à soulever.

Par ailleurs, les pneus ou sacs élémentaires ont tendance à glisser lorsque la bâche est bombée comme dans le cas de silos du type taupinière. Il en résulte que le lestage est parfois insuffisant pour éviter toute entrée et/ou sortie d'air dans le silo.

La présente invention remédie à ces inconvénients.

Elle porte sur un dispositif de lestage du type comprenant une pluralité de sacs élémentaires de lestage destinés à être rangés les uns à la suite des autres sur une zone à lester choisie.

Selon une définition générale de l'invention, le dispositif de lestage comprend au moins un tube creux, d'un diamètre sensiblement égal à celui des sacs élémentaires et dans lequel au moins deux sacs élémentaires sont disposés sensiblement en contact l'un derrière l'autre sans être reliés l'un à l'autre.

Un tel tube permet ainsi de déplacer facilement sur la zone à lester les sacs élémentaires logés dans le tube.

Par exemple, lorsque le tube a une longueur correspondant sensiblement au front d'attaque d'un silo agricole, c'est-à-dire en règle générale la largeur du silo, l'utilisateur peut déplacer très facilement toute une rangée de sacs élémentaires en déplaçant un seul tube en une seule opération et sans effort physique.

De plus, grâce au regroupement compact des sacs élémentaires ainsi obtenu dans le tube, le lestage selon l'invention est meilleur que celui obtenu avec une pluralité de sacs élémentaires non regroupés.

Avantageusement, le tube est muni de moyens de fermetures disposés à chaque extrémité du tube.

Selon un autre aspect de l'invention, les sacs élémentaires et le tube sont de forme générale cylindrique et les sacs élémentaires sont rangés les uns à la suite des autres dans le sens longitudinal des sacs.

En pratique, le tube est réalisé en un matériau similaire à celui des sacs élémentaires. De préférence, le matériau des sacs élémentaires et du tube est une matière plastique telle que du polyéthylène haute densité.

Avantageusement, le tube comprend au moins une ouverture ménagée à un emplacement choisi du tube et dont la taille est choisie pour permettre l'introduction d'au moins un sac élémentaire dans ledit tube.

En pratique, les sacs élémentaires sont remplis d'un matériau de lestage du type sable, gravier ou analogue.

D'autres caractéristiques et avantages de l'invention apparaîtront à la lumière de la description détaillée ci-après des dessins dans lesquels :
- la figure 1 représente schématiquement un silo agricole de type taupinière comprenant une bâche plastique, un filet, et un dispositif de lestage selon l'invention ;
- la figure 2 illustre schématiquement un tube de lestage selon l'invention contenant quatre sacs élémentaires ;
- la figure 3 illustre le tube de la figure 2 équipé de moyens de fermeture à chaque extrémité selon l'invention ;
- la figure 4 illustre schématiquement un silo agricole de type taupinière ;
- la figure 5 illustre schématiquement un silo agricole de type couloir ;
- la figure 6 illustre le déplacement aisé des tubes de lestage selon l'invention ; et
- la figure 7 illustre schématiquement l'ouverture d'un silo et la disposition des moyens de lestage sur le front d'attaque du silo selon l'invention.

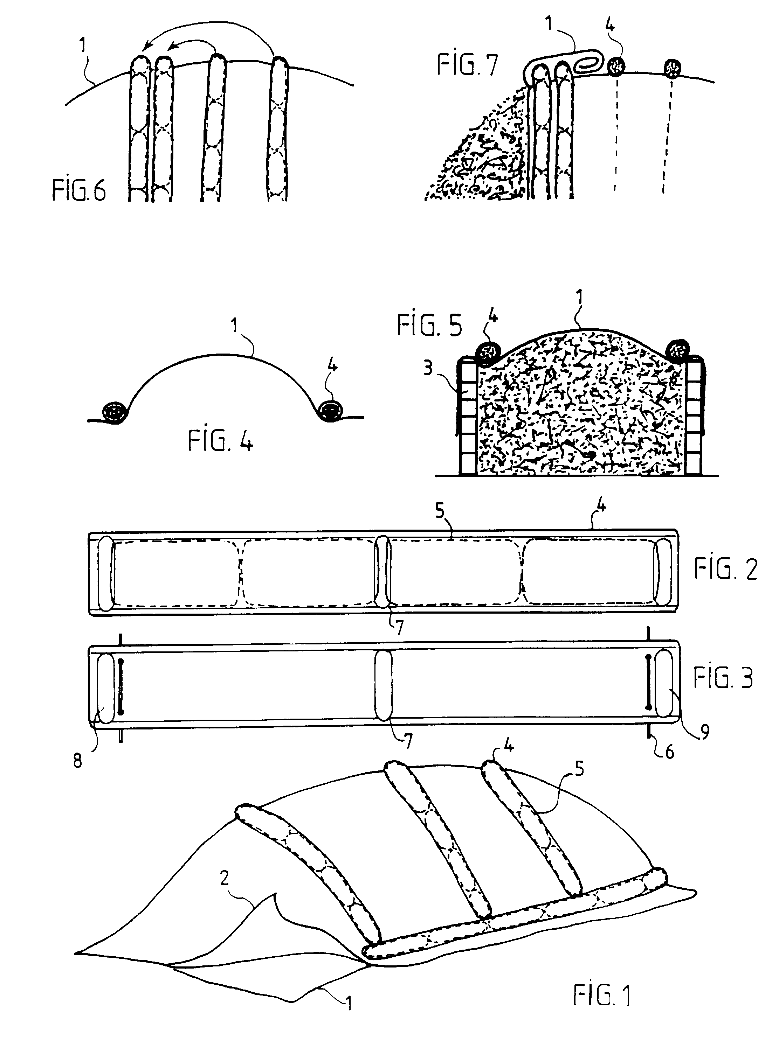

En référence à la figure 1, un silo agricole du type taupinière comprend un film de bâchage ou bâche plastique 1 réalisée en un matériau de type polyéthylène extrudé basse densité.

Pour fermer le silo, la bâche 1 est posée sur l'alimentation des bovins à conserver.

Dans le cas d'un silo de type taupinière (figures 1 et 4), la bâche 1 déborde sur tout le tour du silo sur une distance de l'ordre de 50 cm, à plat sur le sol.

Dans le cas d'un silo de type couloir (figure 5), la largeur de la bâche est d'un mètre environ plus large que le silo. La bâche déborde au-delà des murs 3 du couloir.

En référence à nouveau à la figure 1, un filet 2 tissé, par exemple à partir de monofils ronds très résistants, est posé le cas échéant sur la bâche 1. Un tel filet permet de protéger la bâche plastique contre les oiseaux, la grêle, le vent ou tout ce qui peut déchirer la bâche.

De préférence, le filet 2 recouvre la bâche et déborde semblablement à celle-ci.

Lorsque la bâche et le filet sont mis en place et tendus le mieux possible, on pose des moyens de lestage sur tout le tour du tas, au ras de celui-ci sur le sol (figure 4) ou contre les murs du silo du type couloir (figure 5).

Selon l'invention, les moyens de lestage comprennent des tubes 4 creux, dans lesquels sont disposés des sacs élémentaires 5 sensiblement en contact l'un derrière l'autre sans être reliés l'un à l'autre.

De préférence, le diamètre des tubes 5 est sensiblement égal à celui des sacs élémentaires 4.

D'une façon générale, les sacs élémentaires 5 et les tubes 4 sont de forme cylindrique et les sacs élémentaires sont rangés les uns à la suite des autres dans le sens longitudinal des sacs.

En pratique, le tube 4 est réalisé en un matériau similaire à celui des sacs élémentaires.

De préférence, le matériau des sacs élémentaires et des tubes est une matière plastique telle que le polyéthylène haute densité.

En référence à la figure 3, le tube 4 comprend à ses deux extrémités des moyens de fermeture 6 de type par exemple corde, ou analogue.

Par ailleurs, chaque tube comprend au moins une ouverture 7 ménagée à un emplacement choisi du tube et dont la taille est choisie pour permettre l'introduction de sacs élémentaires dans ledit tube.

Par exemple, en référence à la figure 3, la longueur du tube est choisie pour permettre l'introduction de quatre sacs élémentaires. Dans ce cas, il est prévu une ouverture centrale 7 et deux ouvertures d'extrémités 8 et 9 pour l'introduction des sacs élémentaires. Bien évidemment, la longueur du tube est librement choisie en fonction du nombre de sacs élémentaires à loger, de la longueur élémentaire des sacs et de la largeur du silo.

En référence aux figures 6 et 7, il est possible de déplacer facilement deux tubes 4 le long du front d'attaque d'un silo.

Il est à remarquer que grâce à l'invention, l'utilisation du silo est plus aisée, surtout pour une personne seule dans la mesure où il n'est plus nécessaire de déplacer une pluralité de sacs élémentaires mais seulement un ou deux tubes sans effort (figure 6).

Il convient aussi de remarquer que le glissement des sacs élémentaires est évité puisque les tubes assurent une bonne adhérence.

Dans ce cas, il n'est pas nécessaire d'équiper le filet de moyens d'adhérence des sacs.

Les tubes de lestage peuvent être aussi appliqués à la constitution de digues ou analogues.

## Revendications

1. Dispositif de lestage du type comprenant une pluralité de sacs élémentaires de lestage destinés à être rangés les uns à la suite des autres sur une zone à lester choisie,
caractérisé en ce qu'il comprend au moins un tube (4) creux, d'un diamètre sensiblement égal à celui des sacs élémentaires (5) dans lequel au moins deux sacs élémentaires sont disposés sensiblement en contact l'un derrière l'autre sans être reliés l'un à l'autre, ce qui permet de déplacer facilement sur la zone à lester les sacs élémentaires ainsi logés dans le tube.

2. Dispositif selon la revendication 1, caractérisé en ce que les sacs élémentaires (5) et le tube (4) sont de forme générale cylindrique et en ce que les sacs élémentaires (5) sont rangés les uns à la suite des autres dans le sens longitudinal des sacs.

3. Dispositif selon la revendication 1, caractérisé en ce que le tube (4) est réalisé en un matériau similaire à celui des sacs élémentaires (5).

4. Dispositif selon la revendication 3, caractérisé en ce que le matériau des sacs élémentaires (5) et du tube (4) est une matière plastique telle que du polyéthylène haute densité.

5. Dispositif selon l'une des revendications précédentes, caractérisé en ce que le tube (4) comprend deux extrémités munies chacune de moyens de fermeture (6).

6. Dispositif selon l'une des revendications précédentes, caractérisé en ce que le tube (4) comprend au moins une ouverture (7) ménagée à un emplacement choisi du tube et dont la taille est choisie pour permettre l'introduction d'au moins un sac élémentaire dans ledit tube.

7. Dispositif selon l'une des revendications précédentes, caractérisé en ce que le matériau de lestage est du sable, gravier ou analogue.

8. Dispositif selon l'une quelconque des précédentes revendications, caractérisé en ce que la zone à lester est une bâche en matière plastique (1) d'un silo ou analogue.

9. Dispositif selon l'une des revendications 1 à 7, caractérisé en ce que la zone à lester est une digue ou analogue.
